# EUROPÄISCHE PATENTANMELDUNG

(11) **EP 1 375 967 A2**
(43) Veröffentlichungstag der Anmeldung: **02.01.2004**
(21) Anmeldenummer: 03014006.5
(22) Anmeldetag: 21.06.2003
(51) Int. Cl.: F16H 37/04

(54) **Automatisches Wechselgetriebe**

(30) Priorität: 21.06.2002 DE 10228501
(71) Anmelder: GETRAG Innovations GmbH, 74199 Untergruppenbach (DE)
(72) Erfinder: Voss, Thomas, 70499 Stuttgart (DE); Nicklass, Oliver, 76709 Kronau (DE)
(74) Vertreter: Steil, Christian, Dipl.-Ing.

(57) **Zusammenfassung**

Es wird ein automatisches Wechselgetriebe (10) zum Einrichten einer Mehrzahl von Gangstufen (1-7, R) vorgeschlagen, insbesondere für Kraftfahrzeuge, mit einer Eingangswelle (20), einer Ausgangswelle (24) und zwei Getriebeeinheiten, die zwei parallele Zweige ausbilden, von denen ein Zweig ein Stufengetriebe (12) und der andere ein Summierungsgetriebe (14) mit einer Reibkupplung (16) zum Anfahren und zum zentralen Synchronisieren aufweist, wobei die Reibkupplung (16) ein erstes Reibelement (70) und ein zweites Reibelement (72) aufweist, wobei eines (70) der Reibelemente (70,72) mittels wenigstens eines Schaltelementes (64,68) an verschiedene Getriebeelemente (30,58,66) anbindbar ist, wodurch mindestens ein erster Leistungsführungsbereich für Gangstufenwechsel zwischen niedrigen Gangstufen und mindestens ein zweiter Leistungsführungsbereich für wenigstens den Gangwechsel in die höchste Gangstufe (7) sowie für die höchste Gangstufe (7) eingerichtet wird.

Dabei bindet das wenigstens eine Schaltelement (64,68) das eine Reibelement (70) an solche Getriebeelemente (30,58,66) an, dass bei keiner Betriebsart ein Blindleistungsfluss entsteht (Fig. 1).

## Beschreibung

Die vorliegende Erfindung betrifft ein automatisches Wechselgetriebe zum Einrichten einer Mehrzahl von Gangstufen, insbesondere für Kraftfahrzeuge.

Herkömmliche Handschaltgetriebe sind bekanntermaßen als Vorlegegetriebe in Stirnradbauweise ausgeführt. Aufgrund des Formschlusses des Zahneingriffs bieten diese Getriebe einen hohen Wirkungsgrad. Zum Wechseln der Gänge ist das Getriebe jedoch in der Regel lastfrei zu stellen, so dass eine Zugkraftunterbrechung eintritt. Diese macht sich beim manuellen Schalten subjektiv wenig bemerkbar.

Es gibt seit einigen Jahren jedoch auch eine Tendenz hin zu sogenannten automatisierten Schaltgetrieben. Bei diesen erfolgen Gangwechsel durch Aktuatoren. In der Regel ist diese Art von Getriebe mit einer aktuatorisch betätigten Anfahr- und Trennkupplung herkömmlicher Bauweise gekoppelt. Dieses Getriebe bietet zwar in einem kennfeldgesteuertem Automatikmodus einen noch höheren Wirkungsgrad. Die auftretenden Zugkraftunterbrechungen machen sich jedoch im Automatikmodus subjektiv unangenehmer bemerkbar. Ein derartiges Getriebe ist beispielsweise bekannt aus der DE 196 15 267 A1.

Zur Verbesserung des Komforts ist ferner ein Getriebe vorgeschlagen worden (DE 199 08 602 A1), bei dem die Synchroneinheiten des Vorgelegegetriebes zumindest teillastfähig ausgestaltet sind. Hierdurch ist es möglich, bei einem Gangwechsel das anstehende Motormoment ohne vollständiges Öffnen der eingangsseitigen Trennkupplung an der Synchroneinheit des Zielganges zu übernehmen. Hierdurch wird der Zugkrafteinbruch während eines Schaltvorganges merklich gelindert.

Auf dem Gebiet der Automatikgetriebe für Kraftfahrzeuge gibt es ferner die sogenannten "klassischen" Automaten. Diese weisen einen hydrodynamischen Drehmomentwandler und in der Regel eine Mehrzahl von Planetenradsätzen auf, die mittels Kupplungen bzw. Bremsen angesteuert werden. Bekanntermaßen können mit solchen automatischen Stufengetrieben Gangwechsel unter Last zugkraftunterbrechungsfrei durchgeführt werden. Nachteilig ist bei dieser Art von Automatikgetrieben der niedrigere Wirkungsgrad, der im wesentlichen seine Ursache in dem hydrodynamischen Drehmomentwandler hat. Zur Verbesserung des Wirkungsgrades kann der Wandler in vielen Fällen mit einer Überbrückungskupplung überbrückt werden.

Ferner gibt es auf dem Gebiet der Automatikgetriebe die sogenannten stufenlosen Getriebe. Am weitesten fortgeschritten sind hier die mechanisch stufenlosen Umschlingungsgetriebe mit Stahlband (CVT).

Schließlich sind auch seit vielen Jahren die sogenannten Doppelkupplungsgetriebe bekannt. Diese weisen zwei parallele Kraftübertragungszweige und zwei parallele Anfahr- und Trennkupplungen auf, die überschneidend ansteuerbar sind. Auch mit dieser Art von Getriebe lassen sich Gangwechsel unter Last zugkraftunterbrechungsfrei durchführen. Der konstruktive Aufwand ist jedoch aufgrund der zwei Kupplungen recht erheblich. Ferner sind Doppelkupplungsgetriebe regelungstechnisch nicht einfach zu beherrschen.

Aus der DE 197 41 440 A1 ist ein weiterer Typ von automatischem Wechselgetriebe bekannt. Das Wechselgetriebe weist eine erste, zwischen Antriebs- und Abtriebswelle angeordnete, drehmomentübertragende und verschiedene Übersetzungsverhältnisse ermöglichende Einrichtung auf, die in einer Arbeitsweise eine vollständige Kraftflussentkopplung von Antriebswelle und Abtriebswelle sicherstellt. Parallel zu der ersten Einrichtung ist eine zweite Einrichtung zur Drehmomentübertragung zwischen Antriebsund Abtriebswelle vorgesehen, mit der im Gegensatz zur ersten Einrichtung ein stufenlos wählbares Drehmoment im Bereich von 0 bis zum maximal anliegenden Drehmoment übertragbar ist.

Das Wechselgetriebe weist jedoch nur vier Gänge und insgesamt eine relativ geringe Spreizung auf. Zudem ist der Wirkungsgrad verbesserungswürdig.

Vor diesem Hintergrund ist es die Aufgabe der vorliegenden Erfindung, ein verbessertes automatisches Wechselgetriebe anzugeben.

Diese Aufgabe wird durch ein automatisches Wechselgetriebe zum Einrichten einer Mehrzahl von Gangstufen, insbesondere für Kraftfahrzeuge, gelöst, wobei das Wechselgetriebe eine Eingangswelle, eine Ausgangswelle und zwei Getriebeeinheiten aufweist, die zwei parallele Zweige ausbilden, von denen ein Zweig ein Stufengetriebe und der andere Zweig ein Summierungsgetriebe mit einer Reibkupplung zum Anfahren und zum zentralen Synchronisieren aufweist, wobei die Reibkupplung ein erstes Reibelement und ein zweites Reibelement aufweist, wobei eines der Reibelemente mittels wenigstens eines Schaltelementes an verschiedene Getriebeelemente anbindbar ist, wodurch mindestens ein erster Leistungsführungsbereich für Gangstufenwechsel zwischen niedrigen Gangstufen und mindestens ein zweiter Leistungsführungsbereich für wenigstens den Gangwechsel in die höchste Gangstufe sowie für die höchste Gangstufe eingerichtet wird, wobei das wenigstens eine Schaltelement das eine Reibelement an solche Getriebeelemente anbindet, dass bei keiner Betriebsart ein Blindleistungsfluss entsteht.

Unter einer Betriebsart werden vorliegend Vorwärtsgänge und Schaltvorgänge dazwischen verstanden. Beim Schalten in den bzw. Fahren in dem Rückwärtsgang können hingegen Blindleistungsflüsse auftreten.

Durch die vorliegende Erfindung wird ein automatisches Wechselgetriebe geschaffen, bei dem sich ein Leistungsfluss in der überwiegenden Anzahl von Gangstufen formschlüssig übertragen lässt. Zum Anfahren und zum zentralen Synchronisieren ist eine Reibkupplung vorgesehen, die bei Gangwechseln durch geeignete Ansteuerung ein getriebeeingangsseitig anstehendes Drehmoment in dem zweiten Zweig übernimmt. Anschließend wird der Quellgang ausgelegt und es erfolgt eine Drehzahlangleichung für den Zielgang des Stufengetriebes.

In einem solchen zentral synchronisierten Wechselgetriebe können theoretisch die folgenden Leistungsflüsse auftreten:
- In einem nicht-verzweigten Leistungsfluss fließt die Getriebeeingangsleistung ausschließlich über den Zweig mit dem Stufengetriebe.
- In einem verzweigten Leistungsfluss mit Blindleistungsfluss wird die Getriebeeingangsleistung auf die zwei Zweige aufgeteilt, wobei in dem Summierungsgetriebe ein Teil der Leistung in das Wechselgetriebe zurückgeführt wird, die dann über die Reibkupplung geleitet wird. Die Reibkupplung steuert in diesem Fall die absolute Menge der Blindleistung.
- In einem verzweigten Leistungsfluss ohne Blindleistungsfluss wird die Getriebeeingangsleistung auf die beiden Zweige verteilt und ohne Rückführung einer Blindleistung in dem Summiergetriebe summiert und der Ausgangswelle des Getriebes zugeführt.

Dadurch, dass bei dem erfindungsgemäßen Getriebe das Schaltelement das erste Reibelement nur an solche Getriebeelemente anbindet, dass bei keiner Betriebsart ein Blindleistungsfluss entsteht, treten in dem erfindungsgemäßen Wechselgetriebe ausschließlich ein nicht-verzweigter Leistungsfluss oder ein verzweigter Leistungsfluss ohne Blindleistungsfluss auf.

Demzufolge ergibt sich ein insgesamt hoher Wirkungsgrad.

Das erfindungsgemäße Wechselgetriebe ermöglicht es, mit einer einzelnen Kupplung, nämlich der als Lastschaltkupplung ausgelegten Reibkupplung, jeden Gangwechsel unter Last nahezu zugkraftunterbrechungsfrei durchzuführen.

Im vorliegenden Zusammenhang werden die Begriffe Gang und Gangstufe äquivalent verwendet.

Die Aufgabe wird vollkommen gelöst.

Besonders bevorzugt ist es, wenn das wenigstens eine Schaltelement das erste Reibelement in beiden Leistungsführungsbereichen jeweils an ein Gangrad von Radsätzen des Stufengetriebes anbindet.

Durch diese Maßnahme wird in den beiden Leistungsführungsbereichen auch bei verzweigtem Leistungsfluss ein Blindleistungsfluss vermieden.

Gemäß einer weiteren bevorzugten Ausführungsform weist das Stirnradgetriebe einen Radsatz mit Übersetzung größer 1 (Overdrive-Radsatz) auf, und das wenigstens eine Schaltelement bindet das erste Reibelement in dem zweiten Leistungsführungsbereich an ein Gangrad des Overdrive-Radsatzes an.

Hierdurch wird zunächst eine hohe Spreizung des automatischen Wechselgetriebes erzielt, und die Anbindung an ein Gangrad des Overdrive-Radsatzes ermöglicht, dass bei keiner Betriebsart ein Blindleistungsfluss entsteht.

Ferner ist es bevorzugt, wenn eine der Gangstufen eine direkte Gangstufe ist und wenn die direkte Gangstufe eine niedrigere Gangstufe als die höchste Gangstufe ist, so dass das Gesamtübersetzungsverhältnis in der höchsten Gangstufe kleiner ist als 1 (Overdrive).

Hierdurch wird wie bei der vorherigen Ausführungsform eine hohe Spreizung des Wechselgetriebes erzielt. Durch das Einrichten des direkten Ganges wird der bauliche Aufwand verringert.

Nach einer weiteren bevorzugten Ausführungsform ist die Eingangsleistung in der höchsten Gangstufe auf die zwei Zweige verzweigt, wobei die Reibkupplung in den Reibschluß geschaltet ist.

Dabei ist es ferner bevorzugt, wenn die Eingangsleistung in den anderen Gangstufen als unverzweigter Leistungsfluss durch das Getriebe geführt ist, insbesondere durch das formschlüssige Stufengetriebe.

Es ist ferner von besonderem Vorzug, wenn das erste Reibelement der Reibkupplung mittels des wenigstens einen Schaltelementes wahlweise gehäusefest oder an den Radsatz für die höchste Gangstufe oder an den Radsatz für eine weitere Gangstufe anbindbar ist.

Bei dieser bevorzugten Ausführungsform der Erfindung ist das erste Reibelement mit dem Radsatz für die höchste Gangstufe verbindbar, so dass eine Synchronisierung auch dann erzielt werden kann, wenn der höchste Gang als Overdrive ausgelegt ist. Ferner ergibt sich durch die Vielfalt der Anbindungsmöglichkeiten insgesamt ein verbesserter Wirkungsgrad.

Besonders bevorzugt ist es, wenn die weitere Gangstufe die zweite Gangstufe oder die dritte Gangstufe ist.

Hierdurch kann für jeden Leistungsführungsbereich eine nahezu ideale Anbindung realisiert werden.

Ferner ist es besonders bevorzugt, wenn die Reibkupplung in axialer Richtung zwischen dem Stufengetriebe und dem Summierungsgetriebe angeordnet ist.

Auf diese Weise wird erreicht, dass die Einrichtung zur Drehrichtungsumkehr nicht räumlich parallel zu dem Vorgelegegetriebe angeordnet ist. Insofern ist es möglich, das automatische Wechselgetriebe in radialer Richtung kompakter auszubilden.

Insgesamt ist es von Vorteil, wenn das Summierungsgetriebe einen Planetenradsatz aufweist.

Mit dem Planetenradsatz ist es möglich, sowohl eine Drehrichtungsumkehr zu erzielen als auch auf einfache konstruktive Weise ein Summiergetriebe für die zwei Zweige des Wechselgetriebes zu bilden.

Dabei ist es von besonderem Vorzug, wenn die Eingangswelle mit dem Sonnenrad des Planetenradsatzes verbunden ist.

Hierdurch kann die getriebeeingangsseitig anstehende Leistung unmittelbar und konstruktiv einfach auf den Planetenradsatz übertragen werden.

Ferner ist es von Vorzug, wenn das zweite Reibelement der Reibkupplung mittels eines zweiten Schaltelementes wahlweise mit dem Hohlrad oder dem Planetenträger des Planetenradsatzes verbindbar ist.

Hierdurch lässt sich auf einfache Weise eine Drehrichtungsumkehr realisieren.

Gemäß einer weiteren bevorzugten Ausführungsform ist die Ausgangswelle mittels eines dritten Schaltelementes wahlweise mit dem Hohlrad oder dem Planetenträger des Planentenradsatzes verbindbar.

Diese Maßnahme dient der konstruktiv einfachen Realisierung einer Drehrichtungsumkehr.

Gemäß einer alternativen Ausführungsform ist das zweite Reibelement der Reibkupplung fest mit dem Hohlrad des Planetenradsatzes verbunden.

Hierdurch ergibt sich eine vereinfachte Konstruktion mit weniger Schaltelementen.

Diese Ausführungsform ist insbesondere dann von Vorzug, wenn das Stufengetriebe einen Radsatz für den Rückwärtsgang aufweist.

Anstelle eines zweiten und dritten Schaltelementes zur Drehrichtungsumkehr ist bei dieser Ausführungsform ein eigener Radsatz für den Rückwärtsgang vorhanden, der mittels eines geeigneten Schaltelementes schaltbar ist. Der Radsatz für den Rückwärtsgang kann dabei in üblicher Weise ein Zwischenrad zur Drehrichtungsumkehr aufweisen.

Durch die Maßnahme des Bereitstellens des Rückwärtsganges kann das erfindungsgemäße Wechselgetriebe insgesamt mit deutlich weniger Schaltelementen auskommen. Ferner kann hierdurch insgesamt eine kürzere Bauweise in axialer Richtung erzielt werden.

Gemäß einer besonders bevorzugten Ausführungsform ist die Eingangswelle von einer Hohlwelle umgeben.

Hierdurch ist es möglich, das Wechselgetriebe in axialer Richtung kompakt auszubilden.

Dabei ist es besonders bevorzugt, wenn die Hohlwelle die Abtriebswelle des Stufengetriebes bildet.

Diese Ausgestaltung ermöglicht auf konstruktiv leichte Weise, das Sonnenrad mit der Getriebeeingangswelle und den Planetenträger mit der Abtriebswelle des Stufengetriebes fest zu verbinden.

Demzufolge ist es ebenfalls vorteilhaft, wenn die Hohlwelle mit dem Planetenträger des Planetenradsatzes verbunden ist.

Ferner ist es konstruktiv vorteilhaft, wenn ein Rad eines Radsatzes des höchsten Ganges drehbar an der Hohlwelle gelagert ist.

Auf diese Weise lässt sich die serielle Verbindung zwischen der Reibkupplung und dem Radsatz des höchsten Ganges konstruktiv vergleichsweise einfach und mit kompakter Bauweise realisieren.

Demzufolge ist es vorteilhaft, wenn das drehbar gelagerte Rad des Radsatzes der höchsten Gangstufe mit dem ersten Reibelement der Reibkupplung verbunden ist.

Gemäß einer bevorzugten Ausführungsform ist ein Rad des separat vorgesehenen Radsatzes für den Rückwärtsgang drehbar an der Hohlwelle gelagert.

Hierdurch lässt sich eine serielle Verbindung zwischen der Reibkupplung und dem Radsatz des Rückwärtsganges konstruktiv vergleichsweise einfach und mit kompakter Bauweise realisieren.

Dabei ist es von besonderem Vorteil, wenn das drehbar an der Hohlwelle gelagerte Rad des Radsatzes für den Rückwärtsgang mit dem ersten Reibelement der Reibkupplung verbunden ist.

Durch diese Maßnahme ist es möglich, im Rückwärtsgang über die Reibkupplung anzufahren. Der Rückwärtsgang ist erst dann vollständig eingelegt, wenn die Reibkupplung vollständig geschlossen ist. Bei dieser Betriebsart ergibt sich im Rückwärtsgang ein verzweigter Leistungsfluss, ähnlich wie bei dem höchsten Gang. Bei der Betriebsart im Rückwärtsgang kann jedoch ein Blindleistungsfluss auftreten.

Ferner ist es von Vorteil, wenn eine Schaltkupplung zum Einlegen des Rückwärtsgangsganges synchronisiert ist. Hierdurch lässt sich der Radsatz für den Rückwärtsgang leichter in den Leistungsfluss schalten, trotz Drehrichtungsumkehr.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: eine Getriebeschemazeichnung einer Ausführungsform des erfindungsgemäßen automatischen Wechselgetriebes;
- Fig. 2: eine Darstellung des Getriebes der Fig. 1 mit Hervorhebung des Leistungsflusses beim Anfahren;
- Fig. 3: eine Darstellung des Getriebes der Fig. 1 mit einer Hervorhebung des Leistungsflusses bei geschaltetem ersten Gang;
- Fig. 4: eine Darstellung des Getriebes der Fig. 1 mit Hervorhebung des Leistungsflusses bei geschaltetem zweiten Gang;
- Fig. 5: eine Darstellung des Getriebes der Fig. 1 mit Hervorhebung des Leistungsflusses beim Schalten vom zweiten in den dritten Gang;
- Fig. 6: eine Darstellung des Getriebes der Fig. 1 mit Hervorhebung des Leistungsflusses beim Schalten vom dritten in den vierten Gang;
- Fig. 7: eine Darstellung des Getriebes der Fig. 1 mit Hervorhebung des Leistungsflusses bei geschaltetem direktem sechsten Gang;
- Fig. 8: eine Darstellung des Getriebes der Fig. 1 mit Hervorhebung des Leistungsflusses bei geschaltetem höchstem Gang (Overdrive);
- Fig. 9: eine Tabelle der Schaltzustände von Schaltkupplungen des Wechselgetriebes der Fig. 1 in unterschiedlichen Betriebszuständen;
- Fig. 10: eine Getriebeschemazeichnung einer alternativen Ausführungsform des erfindungsgemäßen automatischen Wechselgetriebes;
- Fig. 11: eine Getriebeschemazeichnung noch einer weiteren alternativen Ausführungsform des erfindungsgemäßen automatischen Wechselgetriebes;
- Fig. 12: eine Tabelle der Schaltzustände von Schaltkupplungen des Wechselgetriebes der Fig. 10 in unterschiedlichen Betriebszuständen; und
- Fig. 13: eine Tabelle der Schaltzustände von Schaltkupplungen des Wechselgetriebes der Fig. 11 in unterschiedlichen Betriebszuständen.

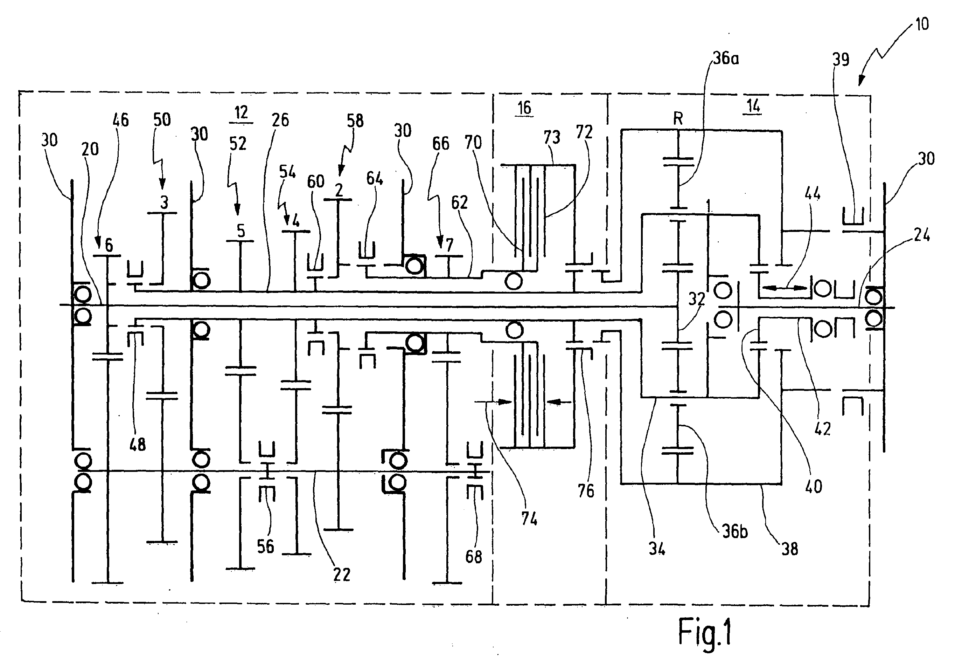

Eine erste Ausführungsform eines erfindungsgemäßen automatischen Wechselgetriebes ist in Fig. 1 generell mit 10 bezeichnet. Das Wechselgetriebe 10 ist als Kraftfahrzeuggetriebe ausgebildet, insbesondere zur Verwendung in Kombination mit einem herkömmlichen Verbrennungsmotor.

Das Wechselgetriebe 10 weist ein Stufengetriebe in Form eines Vorgelegegetriebes 12, einen Planentenradsatz 14 und eine Lamellenkupplung 16 auf.

Das Wechselgetriebe 10 weist ferner eine Eingangswelle 20 und eine hierzu parallel angeordnete Vorgelegewelle 22 auf. Koaxial zu der Eingangswelle 20 ist eine Ausgangswelle 24 vorgesehen.

Um die Eingangswelle 20 herum ist eine Hohlwelle 26 relativ zu dieser verdrehbar gelagert.

Das Wechselgetriebe 10 weist ferner ein schematisch angedeutetes Gehäuse 30 auf, an dem die Wellen 20 bis 26 drehbar gelagert sind.

Der Planetenradsatz 14 weist in an sich herkömmlicher Bauart ein Sonnenrad 32, einen Planetenträger 34 mit Planetenrädern 36 sowie ein Hohlrad 38 auf.

Das Hohlrad 38 ist mittels einer Arretierung 39 an dem Gehäuse 30 festlegbar.

Ein Schieberad 40 ist an einer Schaltnabe 42 vorgesehen, die in axialer Richtung beweglich ist, wie es durch einen Pfeil 44 angedeutet ist. Durch Verschieben der Schaltnabe 42 lässt sich das Schieberad 40 wahlweise mit dem Planetenträger 34 oder mit dem Hohlrad 38 verbinden.

Die Schaltnabe 42 ist drehfest mit der Getriebeausgangswelle 24 verbunden, so dass die Ausgangswelle 24 wahlweise mit dem Planetenträger 34 oder dem Hohlrad 38 verbindbar ist.

Alternativ hierzu ist es auch möglich, die Schaltnabe 42 drehbar an der Ausgangswelle 24 zu lagern und lediglich wahlweise mit der Ausgangswelle 24 zu verbinden, beispielsweise mittels einer herkömmlichen Schaltkupplung. Diese Ausführungsform ist von Vorteil, wenn es in bestimmten Betriebssituationen beabsichtigt ist, den Getriebeeingang vollständig von dem Getriebeausgang zu entkoppeln.

Getriebeeingangsseitig ist ein Verzweigungsradsatz 46 nach der Art einer Konstante vorgesehen. Der Verzweigungsradsatz 46 weist ein mit der Getriebeeingangswelle verbundenes Festrad und ein mit der Vorgelegewelle 22 verbundenes Festrad auf. Die Eingangswelle 20 und die Vorgelegewelle 22 drehen folglich ständig synchron miteinander.

Theoretisch ist es zwar möglich, zwischen dem Wechselgetriebe 10 und dem Verbrennungsmotor des Kraftfahrzeuges eine Trennkupplung vorzusehen. Vorzugsweise ist die Abtriebswelle des Verbrennungsmotors jedoch unlösbar drehfest mit der Getriebeeingriffswelle 20 verbunden.

In axialer Richtung folgen, gesehen von dem Getriebeeingang aus, hinter dem Verzweigungsradsatz 46 eine Schaltkupplung 48 für die Gänge 3 und 6, ein Radsatz 50 für den dritten Gang, ein Radsatz 52 für den fünften Gang, ein Radsatz 54 für den vierten Gang, eine Schaltkupplung 56 für die Gänge 4 und 5, ein Radsatz 58 für den zweiten Gang sowie eine Schaltkupplung 60 für den zweiten Gang.

Der Radsatz 50 für den dritten Gang weist ein drehbar an der Hohlwelle 26 gelagertes Losrad auf. Der Radsatz 52 für den fünften Gang weist ein drehbar an der Vorgelegewelle 22 gelagertes Losrad auf. Der Radsatz 54 für den vierten Gang weist ein drehbar an der Vorgelegewelle 26 gelagertes Losrad auf. Der Radsatz 58 für den zweiten Gang weist ein drehbar an der Hohlwelle 26 gelagertes Losrad auf.

Die Schaltkupplung 48 dient dazu, die Hohlwelle 26 entweder unmittelbar mit der Eingangswelle 20 zu verbinden, oder mit dem Radsatz 50 für den dritten Gang.

Das Wechselgetriebe 10 ist so eingerichtet, dass bei einer direkten Verbindung zwischen Getriebeeingangswelle 20 und Hohlwelle 26 der sechste Gang eingelegt ist, der folglich als direkter Gang mit der Übersetzung 1 vorgesehen ist.

Die Schaltkupplung 56 ist an der Vorgelegewelle 22 vorgesehen und dient dazu, wahlweise den Radsatz 52 für den fünften Gang oder den Radsatz 54 für den vierten Gang mit der Vorgelegewelle 22 zu verbinden.

Die Schaltkupplung 60 ist an der Hohlwelle 26 vorgesehen und dient dazu, den Radsatz 58 für den zweiten Gang mit der Hohlwelle 26 zu verbinden.

Der bislang beschriebene Aufbau entspricht für die diskutierten Gänge der generellen Funktion eines handgeschalteten Vorgelegegetriebes, wobei die Hohlwelle 26 die Abtriebswelle des Vorgelegegetriebes 12 bildet.

An der Hohlwelle 26 ist eine äußere Hohlwelle bzw. Kupplungsnabe 62 drehfest gelagert.

Die äußere Hohlwelle 62 ist mittels einer Vorwahlschaltkupplung 64 wahlweise mit dem Getriebegehäuse 30 oder dem Losrad des Radsatzes 58 für den zweiten Gang verbindbar. Ferner ist an der äußeren Hohlwelle 62 ein Festrad eines Radsatzes 66 für den siebten Gang festgelegt. Ein Losrad des Radsatzes 66 ist drehbar an der Vorgelegewelle 22 gelagert. An der Vorgelegewelle 22 ist ferner eine Schaltkupplung 68 vorgesehen, die dazu dient, das Losrad des Radsatzes 66 mit der Vorgelegewelle 22 zu verbinden.

Ferner sind an der äußeren Hohlwelle 62 Innenlamellen 70 der Lamellenkupplung 16 festgelegt.

Außenlamellen 72 der Lamellenkupplung 16 sind an einem drehbar gelagerten Lamellenträger 73 festgelegt.

Bei 74 ist schematisch angedeutet, dass die Lamellen 70, 72 der Lamellenkupplung 16 mit einer Andruckkraft belastet werden können. Durch die Andruckkraft 74 wird die Differenzdrehzahl zwischen den Innenlamellen 70 und 72 auf einen beliebigen Wert von Null bis beliebig gesteuert bzw. geregelt. Eine Differenzdrehzahl von Null wird im vorliegenden Zusammenhang auch als Reibschluss bezeichnet.

Der Lamellenträger 73 ist mittels einer Schaltkupplung 76 wahlweise mit der Hohlwelle 26 oder dem Hohlrad 38 verbindbar.

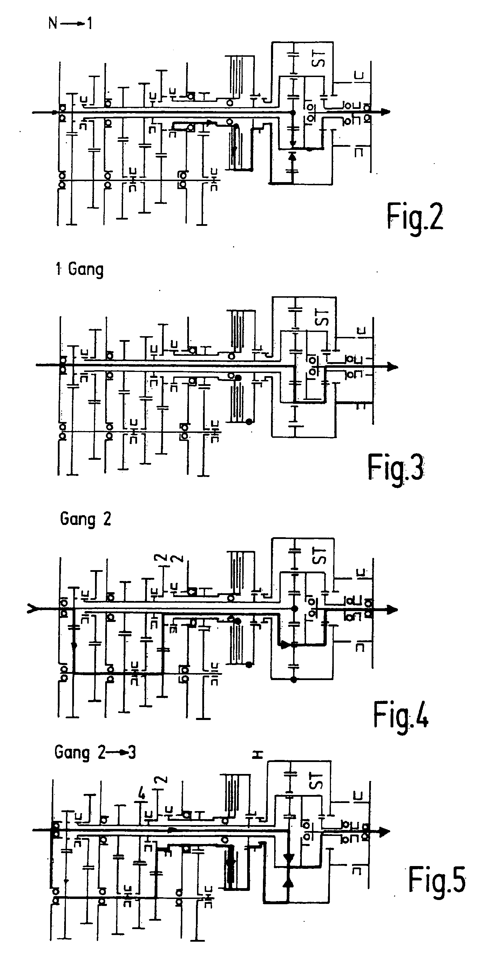

Die Funktionsweise des Wechselgetriebes 10 wird anhand der Fig. 2 bis 9 erläutert.

Im Leerlauf wird die Eingangswelle 20 von dem Verbrennungsmotor angetrieben. Vor dem Anfahren des Kraftfahrzeuges steht die Ausgangswelle 24. Keine der Schaltkupplungen 48, 56, , 68 ist geschaltet. Die Schaltkupplung 76 verbindet den Lamellenträger 73 mit der Hohlwelle 26. Das Schieberad 40 ist mit dem Planetenträger 34 verbunden. Die Drehzahl des Sonnenrades führt folglich zu einer entsprechenden Drehzahl der Planetenräder 36 und einer entsprechenden Leerlaufdrehzahl des Hohlrades 38.

Zum Anfahren (siehe Fig. 2) wird zunächst die äußere Hohlwelle 62 mittels der Vorwahl-Schaltkupplung 64 mit dem Getriebegehäuse 30 verbunden. Die Innenlamellen 70 sind dann folglich getriebefest. Ferner wird die Schaltkupplung 76 so geschaltet, dass die Außenlamellen 72 mit dem Hohlrad 38 verbunden sind.

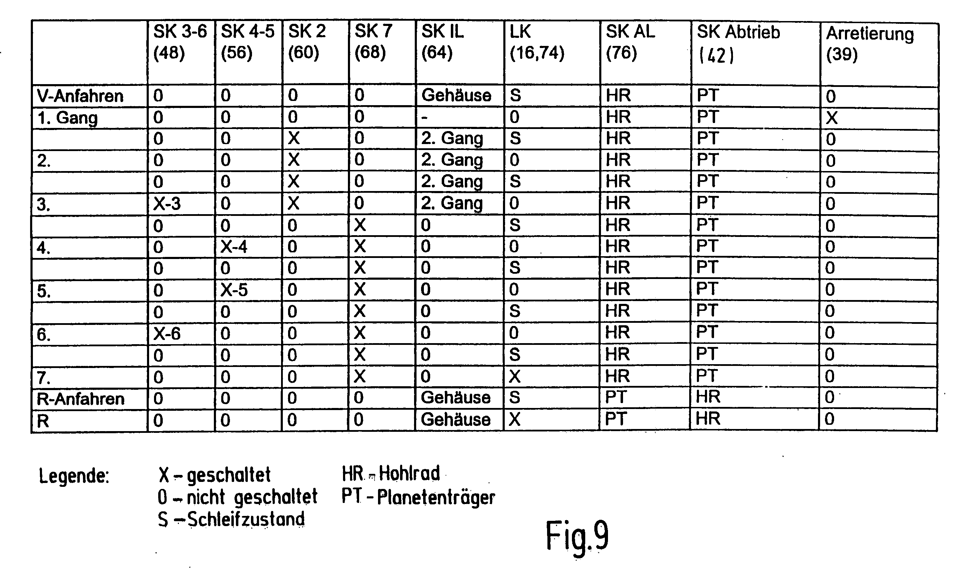

Zum Anfahren im ersten Vorwärtsgang, was in Fig. 9 in der ersten Zeile gezeigt ist, wird die Lamellenkupplung 16 belastet, so dass das Hohlrad 34 sich nach und nach mehr an dem Getriebegehäuse 30 abstützen kann. Dies bewirkt, dass die getriebeeingangsseitige Leistung mehr und mehr auf den Planetenträger geführt wird, so dass das Kraftfahrzeug anfährt. Wenn sich die Lamellenkupplung 16 im Reibschluss befindet, ist der erste Gang eingelegt. Zur Entlastung der Lamellenkupplung 16 kann das Hohlrad 38 in diesen Zustand mittels der Arretierung 39 am Gehäuse 30 festgelegt werden (Fig. 3).

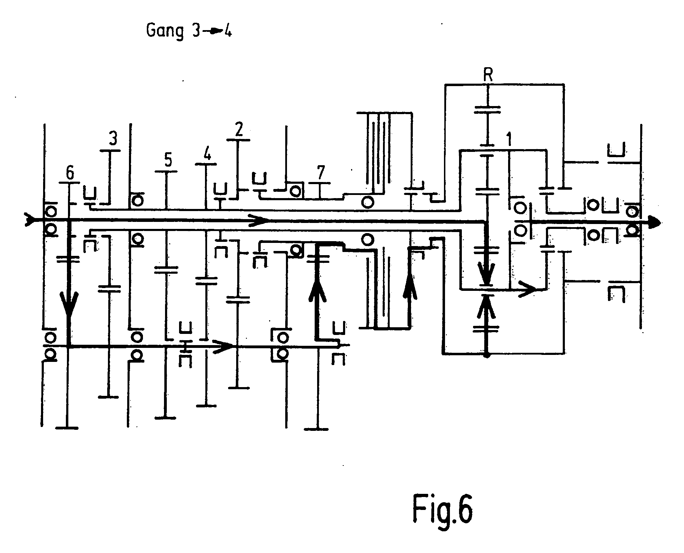

Zum Schalten in den zweiten Gang wird die Schaltkupplung 64 umgeschaltet, so dass die Innenlamellen 70 mit dem Losrad des zweiten Ganges verbunden sind. Anschließend wird die Lamellenkupplung 16 belastet und die Arretierung 39 gelöst. Durch geeignete Belastung der Lamellenkupplung 16 werden das Moment und die Drehzahl geeignet beeinflusst, bis die Schaltkupplung 60 für den Radsatz 58 des zweiten Ganges im wesentlichen lastfrei eingelegt werden kann. Anschließend wird die Lamellenkupplung 16 entlastet, so dass der Leistungsfluss nunmehr ausschließlich von der Eingangswelle 20 auf die Vorgelegewelle 22, dann auf die Hohlwelle 26 und schließlich über den Planetenträger 34 auf die Ausgangswelle 24 geführt wird. Dieser Zustand ist in Fig. 4 gezeigt.

Zum Schalten vom zweiten in den dritten Gang wird die Lamellenkupplung 16 belastet, um das getriebeeingangsseitige Moment zu übernehmen. Dies führt zu einem verzweigten Leistungsfluss über die Getriebeeingangswelle 20 auf den Planetenträger 34 einerseits und über die Vorgelegewelle 22, den Radsatz 58, die Lamellenkupplung 16 sowie das Hohlrad 38 auf den Planetenträger 34 andererseits. Dieser Zustand ist in Fig. 5 hervorgehoben dargestellt. Hierdurch wird die Schaltkupplung 60 entlastet und kann ausgelegt werden. Anschließend kann durch geeignete Steuerung der Lamellenkupplung 16 ein Drehzahlangleich erfolgen, so dass die Schaltkupplung 48 lastfrei mit dem Losrad des Radsatzes 50 für den dritten Gang verbunden werden kann. Anschließend wird die Lamellenkupplung 16 wieder entlastet, so dass der Leistungsfluss wieder rein kraftschlüssig nach der Art eines Vorgelegegetriebes auf die Ausgangswelle geführt wird.

Die Gangwechsel 1 bis 3 folgen alle dem oben beschriebenen Schema.

Bei einem Gangwechsel vom dritten in den vierten Gang wird die Schaltkupplung 64 gelöst und die Schaltkupplung 68 wird geschlossen. Demzufolge sind die Innenlamellen 70 der Lamellenkupplung 16 mit dem Radsatz des höchsten Ganges (hier Gang 7) verbunden.

Anschließend erfolgt, wie oben, eine Drehmomentübernahme durch die Reibkupplung 16 (dies ist in Fig. 6 gezeigt) und dann ein Auslegen des dritten und darauffolgend Einlegen des vierten Ganges durch Betätigung der Schaltkupplungen 48 und 60.

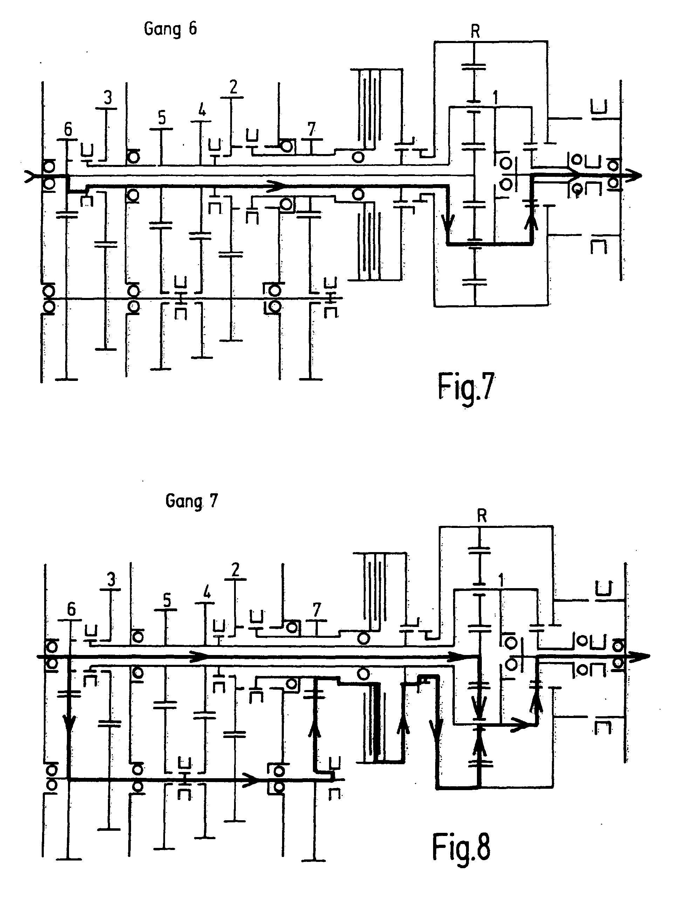

Die weiteren Gangwechsel vom vierten in den fünften und vom fünften in den sechsten Gang erfolgen in entsprechender Weise. Im sechsten Gang (Fig. 7) ist die Schaltkupplung 48 so geschaltet, dass die Getriebeeingangswelle 20 unmittelbar mit der Hohlwelle 26 verbunden ist und insofern der direkte Gang geschaltet ist.

Eine Besonderheit stellt das Einlegen des siebten Ganges dar, der als Gangstufe mit einer Gesamtübersetzung kleiner als 1 (Overdrive) ausgebildet ist.

Zum Wechsel vom sechsten in den siebten Gang wird zunächst die Lamellenkupplung 16 belastet, bis die Schaltkupplung 48 lastfrei ausgelegt werden kann. Anschließend wird die Lamellenkupplung 16 weiter belastet, bis der Reibschluss erreicht ist. In diesem Zustand ist der siebte Gang eingelegt (Fig. 8) und der Leistungsfluss ist verzweigt, jedoch ohne Blindleistungsfluss, und läuft einerseits über die Eingangswelle 20 und andererseits über Vorgelegewelle 22, Radsatz 66, Lamellenkupplung 16 und Hohlrad 38 auf den Planetenträger 34.

Folglich kann das Wechselgetriebe 10 insgesamt eine hohe Spreizung bei einer Vielzahl von Gängen verwirklichen.

Im siebten Gang muss die Lamellenkupplung 16 im Reibschluss gehalten werden. Demzufolge muss entweder kontinuierlich oder nach Bedarf Leistung zugeführt werden, um die Lamellenkupplung 16 im Reibschluss zu halten.

Theoretisch ist es zwar denkbar, eine Kupplung zur Überbrückung der Innen- und Außenlamellen 70, 72 vorzusehen. Diese wäre jedoch konstruktiv vergleichsweise aufwendig. Das "Halten" des Reibschlusses verringert den Wirkungsgrad hingegen nur wenig.

Insgesamt ergibt sich gegenüber bekannten zentral synchronisierten Wechselgetrieben eine deutliche Reduzierung der Kupplungsmomente in den höheren Gangwechseln. Die Getriebespreizung wird mittels des Overdrive erhöht, was zu einer Verbrauchsreduzierung führt.

Gegenüber einem 7-Gang-Getriebe, bei dem der höchste Gang als Direktgang ausgeführt ist und das ansonsten in seinem grundsätzlichen Aufbau dem Wechselgetriebe gemäß der DE 197 41 440 A1 entspricht, ergibt sich kein konstruktiver Mehraufwand. Die Anzahl der Klauenkupplungen bleibt konstant.

Dies wird im wesentlichen dadurch erreicht, dass die Innenlamelle der Lamellenkupplung am Losrad des höchsten Ganges angebunden wird, und zwar bei Gangwechseln, bei denen die Anbindung an das Losrad des niedrigeren Ganges nicht mehr möglich ist (im vorliegenden Fall ab dem vierten Gang).

Da eine Anbindung an die Abtriebswelle entfällt, ist zur Anbindung der Innenlamelle an das Losrad des höchsten Ganges keine zusätzliche Kupplung notwendig. Ferner ist es mit dem vorliegenden Getriebekonzept möglich, die Lamellenkupplung 16 für ein Moment auszulegen, das lediglich dem 1,5-fachen des Antriebsmomentes entspricht. Mit anderen Worten wird in den unteren Gangwechseln ein statisches Kupplungsmoment vom 1,5-fachen des Antriebsmomentes benötigt. Bei den höheren Gangwechseln reduziert sich das Kupplungsmoment auf das 0,65-fache des Antriebsmomentes. Demgegenüber ist das benötigte statische Kupplungsmoment im Stand der Technik bei den höheren Gangwechseln 4,2-fach so groß wie das Antriebsmoment.

Zwar erhöht sich damit in den höheren Gangwechseln die Differenzdrehzahl in der Lamellenkupplung 16. Für die Dimensionierung der Bauteile der Lamellenkupplung ist jedoch eine Reduzierung des maximalen Momentniveaus von größerer Bedeutung als eine Reduzierung der Differenzdrehzahl.

Obgleich aus Gründen einer einfachen Konstruktion die Innenlamellen 70 nur an das Losrad des höchsten Ganges (hier siebter Gang) und nicht an die Abtriebswelle (hier Hohlwelle 26) angebunden werden kann, ist es natürlich auch möglich, zusätzlich zu der Anbindung der Innenlamellen 70 an das Losrad des höchsten Ganges wahlweise eine Anbindung an die Abtriebswelle (hier Hohlwelle 26) zu ermöglichen.

Bei dieser Ausführungsform ist insgesamt ein noch höherer Wirkungsgrad erzielbar.

Insgesamt wird mit dem erfindungsgemäßen Wechselgetriebe in den Gangstufen 1 bis 6 jeweils ein nicht-verzweigter Leistungsfluss realisiert. Bei diesem fließt die Getriebeeingangsleistung ungeteilt über das Stufengetriebe (Gänge 2 bis 6) bzw. über die Getriebeeingangswelle (Gang 1). Die Leistung wird dabei nicht über die Lamellenkupplung geführt. Folglich ist in diesen Gangstufen jeweils eine formschlüssige Kraftübertragung realisiert. Der Wirkungsgrad entspricht dann in etwa dem eines Handschaltgetriebes in Vorgelegebauweise.

Andererseits tritt bei Gangwechseln jeweils ein verzweigter Leistungsfluss auf. Die Getriebeeingangsleistung fließt zunächst über die Antriebswelle in das Wechselgetriebe. An dem Verzweigungsradsatz teilt sich die Leistung dann auf. Die beiden Zweige des Wechselgetriebes führen eine Leistung, die jeweils kleiner ist als die Antriebsleistung. Ein Teil der Leistung wird dabei über die Reibkupplung geführt. Der Betrag der Leistung, der über diesen Zweig geführt wird, ist variabel und wird über die Betätigung der Reibkupplung gesteuert. Der andere Teil der Antriebsleistung wird über einen starren Zweig geleitet, die Kinematik dieses Zweiges ist fest definiert. Indirekt wird hingegen die Kinetik dieses Zweiges durch den variablen Zweig, in dem sich die Reibkupplung befindet, definiert. Abtriebsseitig wird die Leistung dann wieder summiert und der Abtriebswelle zugeführt.

Hingegen tritt bei dem erfindungsgemäßen Wechselgetriebe kein verzweigter Leistungsfluss mit Blindleistung auf. Bei einem solchen Leistungsfluss würde die Motorleistung aufgeteilt und dann in dem Summiergetriebe wieder zusammengeführt. Dabei würde ein Teil der Leistung von diesem Punkt aus der Getriebeabtriebswelle zugeführt. Ein anderer Teil würde jedoch in das Wechselgetriebe zurückgeführt. Dieser als Blindleistung bezeichnete Leistungsteil würde dann über die Reibkupplung geleitet. Auch dabei wäre die Kupplung aktiv und würde die absolute Menge der Blindleistung steuern. Auf die Antriebsleistung normiert wäre der Anteil der Blindleistung konstant.

Durch die Maßnahme, dass die Innenlamelle in dem zweiten Leistungsführungsbereich nicht mit der Abtriebswelle verbunden wird, sondern mit einem weiteren Losrad, wird erreicht, dass kein verzweigter Leistungsfluss mit Blindleistung auftritt.

Sofern dieses Losrad gegenüber dem Antrieb untersetzt ist, so ergeben sich die folgenden weiteren Eigenschaften:
- Overdrive im höchsten (hier siebten) Gang
- Reduzierte Kupplungsmomente
- Reduzierte Schaltzeiten.

Beim Schaltvorgang kommt generell die Reibkupplung zum Einsatz. Durch die Betätigung der Reibkupplung wird die Motordrehzahl reduziert und die Abtriebsdrehzahl erhöht. Während des Schaltvorganges wird eine Drehzahlsynchronisation mittels der Reibkupplung durchgeführt. Für den zweiten Leistungsführungsbereich, bei dem die Innenlamelle an dem Losrad für den höchsten Gang angebunden ist, benötigt die Erfindung ein gegenüber dem Stand der Technik geringeres Kupplungsmoment. Umgekehrt erzeugt bei gleichem Kupplungsmoment die Erfindung ein höheres Trägheitsmoment an der Eingangswelle. Hierdurch kann der Motor schneller auf die Soll-Drehzahl abgebremst werden.

Demzufolge kann die Schaltspontaneität erhöht werden.

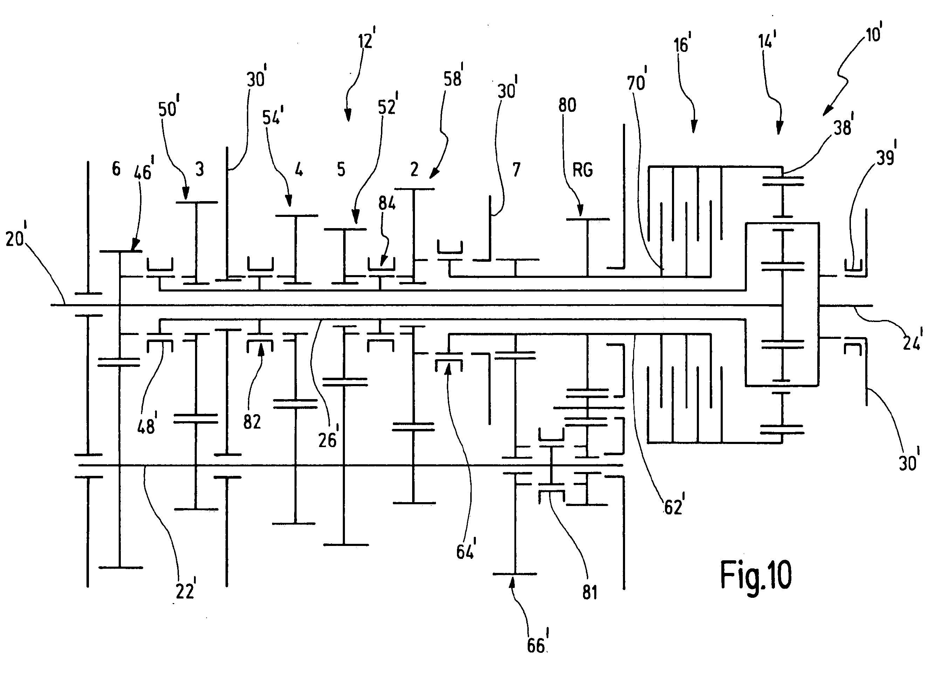

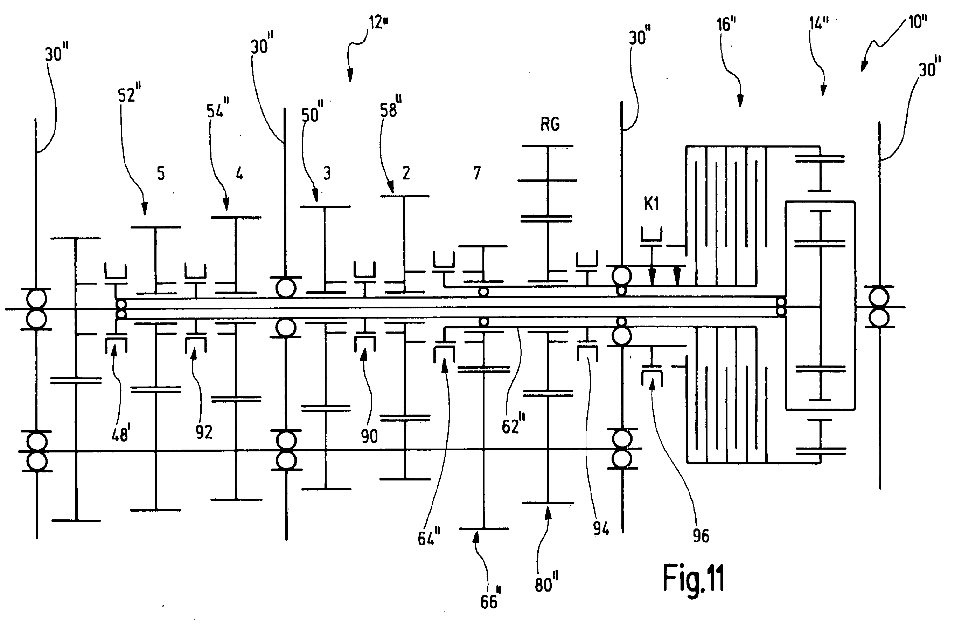

Die Figuren 10 und 11 zeigen alternative Ausführungsformen des erfindungsgemäßen automatischen Wechselgetriebes, das in diesen Figuren generell mit 10' bzw. 10'' bezeichnet ist.

Die generelle Funktionsweise der alternativen Wechselgetriebe 10' und 10' ' entspricht jener des Wechselgetriebes der Figur 1. Um Wiederholungen zu vermeiden wird auf eine nochmalige Beschreibung der einzelnen Elemente und deren Funktionsweise verzichtet. Im Folgenden wird lediglich auf die jeweiligen Unterschiede zu der Ausführungsform der Figur 1 eingegangen.

Zunächst ist beiden automatischen Wechselgetrieben 10' und 10'' gemeinsam, dass das jeweilige Stufengetriebe 12' bzw. 12'' einen separaten Radsatz 80 bzw. 80'' für den Rückwärtsgang RG aufweist.

Durch das Bereitstellen eines jeweiligen separaten Radsatzes 80 bzw. 80'' für den Rückwärtsgang RG kann die Komplexität des automatischen Wechselgetriebes deutlich verringert werden. Bei der Ausführungsform der Figur 1 sind zur Erzielung einer Drehrichtungsumkehr die Schaltkupplung 76 und die Schaltnabe 42 vorgesehen, die eine Drehrichtungsumkehr in dem Planetenradsatz 14 ermöglichen.

Diese Schaltkupplungen sind bei den Ausführungsformen der Figuren 10 und 11 nicht notwendig.

Es ist lediglich eine weitere Schaltkupplung zum Schalten des Radsatzes 80 bzw. 80'' erforderlich. Diese Schaltkupplung ist bei der Ausführungsform der Figur 10 in ein Schaltkupplungspaket integriert, mit dem auch der Radsatz 66' für den 7. Gang geschaltet wird.

Bei dem automatischen Wechselgetriebe 10' der Figur 10 ist ferner die Radsatzanordnung gegenüber dem Wechselgetriebe der Figur 1 leicht geändert. Demzufolge ist eine Schaltkupplung 82 zum Schalten des 4. Ganges und eine Schaltkupplung 84 zum Schalten des 5. und 2. Ganges vorgesehen.

Bei dem automatischen Wechselgetriebe 10'' der Figur 11 ist eine weitere alternative Radsatzanordnung vorgesehen. Demzufolge ist eine Schaltkupplung 90 zum Schalten des 2. und des 3.

Ganges, eine Schaltkupplung 92 zum Schalten des 4. und des 5. Ganges und eine separate Schaltkupplung 94 zum Schalten des Rückwärtsganges vorgesehen.

Während die Schaltkupplung 81 bei der Ausführungsform der Figur 10' an der Vorgelegewelle 22' angeordnet ist, ist die separate Schaltkupplung 94 an der äußeren Hohlwelle 62'' angeordnet.

Die Ausführungsform des automatischen Wechselgetriebes 10' der Figur 11 unterscheidet sich von der Ausführungsform der Figur 10 dadurch, dass die Reibkupplung 16'' nicht über die Schaltkupplung 64' mit dem Gehäuse 30' verbindbar ist, sondern über eine separate Schaltkupplung 96. Hierdurch kann auf eine weitere separate Stützwand zum Anbinden der Reibkupplung 16'' an das Gehäuse 30" verzichtet werden. Die Schaltkupplung 96 ist dabei in unmittelbarer Zuordnung zur Reibkupplung 16'' vorgesehen.

Bei beiden Ausführungsformen gemäß Figur 10 und Figur 11 ist ferner eine Arretierung 39', wie bei der ersten Ausführungsform gemäß Figur 1, vorgesehen. Dies ist in Figur 10 dargestellt, in Figur 11 aus Übersichtlichkeitsgründen jedoch nicht.

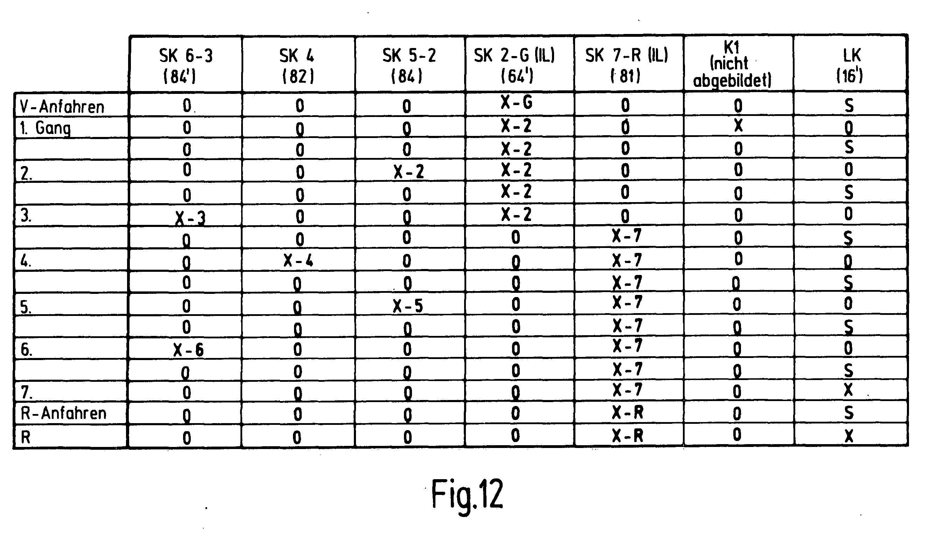

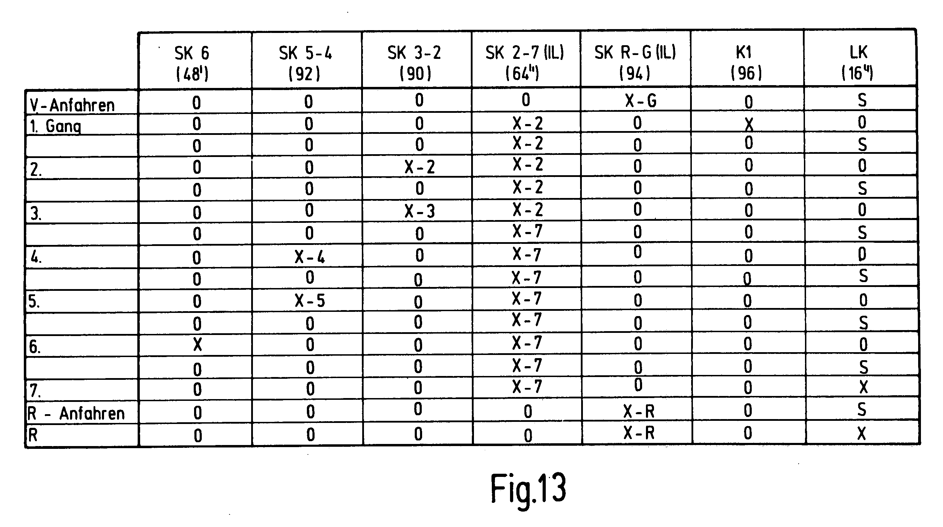

In den Figuren 12 und 13 sind, entsprechend Fig. 9, Tabellen der Schaltzustände der Schaltkupplungen der Wechselgetriebe 10' bzw. 10'' dargestellt, aus denen die Funktionsweise dieser Wechselgetriebe im Detail hervorgeht.

## Patentansprüche

1. Automatisches Wechselgetriebe (10) zum Einrichten einer Mehrzahl von Gangstufen (1-7, R), insbesondere für Kraftfahrzeuge, mit einer Eingangswelle (20), einer Ausgangswelle (24) und zwei Getriebeeinheiten, die zwei parallele Zweige ausbilden, von denen ein Zweig ein Stufengetriebe (12) und der andere ein Summierungsgetriebe (14) mit einer Reibkupplung (16) zum Anfahren und zum zentralen Synchronisieren aufweist, wobei die Reibkupplung (16) ein erstes Reibelement (70) und ein zweites Reibelement (72) aufweist, wobei eines (70) der Reibelemente (70,72) mittels wenigstens eines Schaltelementes (64,68) an verschiedene Getriebeelemente (30,58,66) anbindbar ist, wodurch mindestens ein erster Leistungsführungsbereich für Gangstufenwechsel zwischen niedrigen Gangstufen und mindestens ein zweiter Leistungsführungsbereich für wenigstens den Gangwechsel in die höchste Gangstufe (7) sowie für die höchste Gangstufe (7) eingerichtet wird, wobei das wenigstens eine Schaltelement (64,68) das erste Reibelement (70) an solche Getriebeelemente (30,58,66) anbindet, dass bei keiner Betriebsart ein Blindleistungsfluss entsteht.

2. Automatisches Wechselgetriebe nach Anspruch 1, wobei das wenigstens eine Schaltelement (64, 68) das erste Reibelement (70) in beiden Leistungsführungsbereichen jeweils an ein Gangrad von Radsätzen (58, 66) des Stufengetriebes (12) anbindet.

3. Automatisches Wechselgetriebe nach Anspruch 1 oder 2, wobei das Stufengetriebe (12) einen Radsatz (66) mit Übersetzung größer 1 (Overdrive-Radsatz) aufweist und dass das wenigstens eine Schaltelement (64, 68) das erste Reibelement (70) in dem zweiten Leistungsführungsbereich an ein Gangrad des Overdrive-Radsatzes (66) anbindet.

4. Automatisches Wechselgetriebe nach einem der Ansprüche 1 - 3, wobei eine der Gangstufen eine direkte Gangstufe (6) ist und wobei die direkte Gangstufe (6) eine niedrigere Gangstufe als die höchste Gangstufe (7) ist, so dass das Gesamtübersetzungsverhältnis in der höchsten Gangstufe (7) kleiner ist als 1 (Overdrive).

5. Automatisches Wechselgetriebe nach einem der Ansprüche 1 - 4, wobei die Eingangsleistung in der höchsten Gangstufe (7) auf die zwei Zweige verzweigt ist, wobei die Reibkupplung (16) in den Reibschluss geschaltet ist.

6. Automatisches Wechselgetriebe nach Anspruch 5, wobei die Eingangsleistung in den anderen Gangstufen (1-6) als unverzweigter Leistungsfluss durch das Stufengetriebe (10) geführt ist.

7. Automatisches Wechselgetriebe nach einem der Ansprüche 1 - 6, wobei das erste Reibelement (70) der Reibkupplung (16) mittels des wenigstens einen Schaltelementes (64, 68) wahlweise gehäusefest oder an den Radsatz für die höchste Gangstufe (7) oder an einen Radsatz für eine weitere Gangstufe (2) anbindbar ist.

8. Automatisches Wechselgetriebe nach Anspruch 7, wobei die weitere Gangstufe der zweite Gang (2) ist.

9. Automatisches Wechselgetriebe nach Anspruch 7, wobei die weitere Gangstufe der dritte Gang (3) ist.

10. Automatisches Wechselgetriebe nach einem der Ansprüche 1 - 9, wobei die Reibkupplung (16) in axialer Richtung zwischen dem Stufengetriebe (12) und dem Summierungsgetriebe (14) angeordnet ist.

11. Automatisches Wechselgetriebe nach einem der Ansprüche 1 - 10, wobei das Summierungsgetriebe (14) einen Planetenradsatz (14) aufweist.

12. Automatisches Wechselgetriebe nach Anspruch 11, wobei die Eingangswelle (20) mit dem Sonnenrad (32) des Planetenradsatzes (14) verbunden ist.

13. Automatisches Wechselgetriebe nach einem der Ansprüche 11 oder 12, wobei das zweite Reibelement (72) der Reibkupplung (16) mittels eines zweiten Schaltelementes (76) wahlweise mit dem Hohlrad (38) oder dem Planetenträger (34) des Planetenradsatzes (14) verbindbar ist.

14. Automatisches Wechselgetriebe nach einem der Ansprüche 11 - 13, wobei die Ausgangswelle (24) mittels eines dritten Schaltelementes (42) wahlweise mit dem Hohlrad (38) oder dem Planetenträger (34) des Planetenradsatzes (14) verbindbar ist.

15. Automatisches Wechselgetriebe nach Anspruch 11 oder 12, wobei das zweite Reibelemente (72') der Reibkupplung (16') fest mit dem Hohlrad (38') des Planetenradsatzes (14') verbunden ist.

16. Automatisches Wechselgetriebe nach Anspruch 15, wobei das Stufengetriebe (12') einen Radsatz (80) für den Rückwärtsgang (RG) aufweist.

17. Automatisches Wechselgetriebe nach einem der Ansprüche 1 - 16, wobei die Getriebeeingangswelle (20) von einer Hohlwelle (26) umgeben ist.

18. Automatisches Wechselgetriebe nach Anspruch 17, wobei die Hohlwelle (26) die Abtriebswelle des Stufengetriebes (12) bildet.

19. Automatisches Wechselgetriebe nach Anspruch 11 und nach Anspruch 17 oder 18, wobei die Hohlwelle (26) mit dem Planetenträger (34) des Planetenradsatzes verbunden ist.

20. Automatisches Wechselgetriebe nach einem der Ansprüche 17 - 19, wobei ein Rad eines Radsatzes (66) des höchsten Ganges (7) drehbar an der Hohlwelle (26) gelagert ist.

21. Automatisches Wechselgetriebe nach Anspruch 20, wobei das drehbar an der Hohlwelle (26) gelagerte Rad des Radsatzes (66) der höchsten Gangstufe (7) mit dem ersten Reibelement (70) der Reibkupplung (16) verbunden ist.

22. Automatisches Wechselgetriebe nach einem der Ansprüche 16 - 21, wobei ein Rad des Radsatzes (80) für den Rückwärtsgang (RG) drehbar an der Hohlwelle (26') gelagert ist.

23. Automatisches Wechselgetriebe nach Anspruch 22, wobei das drehbar an der Hohlwelle (26') gelagerte Rad des Radsatzes (80) für den Rückwärtsgang (RG) mit dem ersten Reibelement (80') der Reibkupplung (16') verbunden ist.

24. Automatisches Wechselgetriebe nach einem der Ansprüche 16 - 24, wobei eine Schaltkupplung (81) zum Einlegen des Rückwärtsganges (RG) synchronisiert ist.
